# EUROPÄISCHE PATENTANMELDUNG

(11) **EP 2 436 445 A2**
(43) Veröffentlichungstag der Anmeldung: **04.04.2012**
(21) Anmeldenummer: 11006308.8
(22) Anmeldetag: 30.07.2011
(51) Int. Cl.: B01L 3/00, B01L 99/00

(54) **Vorrichtung und Verfahren zur Erzeugung oder zur Ablage eines Fluidstroms aus Fluidsegmenten und ihre Verwendung**

(30) Priorität: 02.10.2010 DE 102010047384
(71) Anmelder: Karlsruher Institut Für Technologie (KIT), 76131 Karlsruhe (DE)
(72) Erfinder: Rapp, Bastian, 76137 Karlsruhe (DE); Schmumacher, André, 76857 Gossersweiler-Stein (DE)
(74) Vertreter: Gärtner, Stephan

(57) **Zusammenfassung**

Die Erfindung betrifft eine Vorrichtung zur Erzeugung oder zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, aufweisend einen Formkörper (2), der einen Kanal (21) zur Führung des Fluidstroms besitzt, von dem n ≥ 1 erste Zugänge (22a - 22g) und n zweite Zugänge (23a - 23g) derart abzweigen, dass diese in n Vertiefungen (11a - 11g) einführbar sind, wobei sich die Längen der ersten Zugänge (22a - 22g) von den Längen der zweiten Zugänge (23a - 23g) unterscheiden und wobei im Kanal (21) zwischen der Abzweigungsstelle jedes zweiten Zugangs (23a - 23g) und der Abzweigungsstelle jedes zugehörigen ersten Zugangs (22a - 22g) jeweils ein erstes Ventil (24a - 24g) und an jedem zweiten Zugang (23a - 23g) jeweils ein zweites Ventil (25a - 25g) angebracht sind.

Die Erfindung betrifft weiterhin Verfahren zur Erzeugung und zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, und die Verwendung der Vorrichtung als Verbindungseinrichtung zwischen einem mikrofluidischen Kanal und einer Mikrotiterplatte.

## Beschreibung

Die Erfindung betrifft eine Vorrichtung und Verfahren zur Erzeugung und zur Ablage eines Fluidstroms aus Fluidsegmenten, die jeweils durch ein mit den Fluidsegmenten nicht mischbares Mittlermedium getrennt sind, eine Anordnung mit einer derartigen Vorrichtung, die auf eine Einrichtung zur Aufbewahrung von Flüssigkeiten (Mikrotiterplatte) aufgebracht ist, sowie die Verwendung der Vorrichtung.

Die Frage, wie die sich derzeit im Labormaßstab entwickelten Vorrichtungen der *Mikrofluidik* an den industriellen Standard der Mikrotiterplatten anschließen lassen, stellt eines der größten Hindernisse bei der Überführung von mikrofluidischen Einrichtungen in industrielle Anwendungen dar.

*Mikrotiterplatten (engl.* micro well plates) sind mit einer Ausdehnung von 127,76 mm × 85,48 mm × 14,35 mm etwa postkartengroße zumeist Polymerkomponenten, die eine Vielzahl von kleinen Vertiefungen (Näpfchen), *engl.* Wells, aufweisen. Sie haben sich als gemäß der ANSI/SBS 1-2004 normierter Standard für eine Vielzahl von Anwendungen in den Lebenswissenschaften etabliert und stellen daher die bevorzugten Standardsysteme zur Aufbewahrung einer großen Anzahl gleicher oder verschiedenartiger Proben in flüssiger Form in Substanzbibliotheken, z. B. Pharmazeutika oder DNA-Sequenzen dar. In der kombinatorischen Chemie oder beim Wirkstoff-Screening kommen Mikrotiterplatten als parallele Reaktionsgefäße zum Einsatz. Damit lassen sich eine Vielzahl von chemischen Versuchen parallel in je einem Well einer Mikrotiterplatte durchführen. So dienen je nach Größe der gewählten Platte 6, 12, 24, 48, 96, 384 oder 1536 Wells als parallele Reaktionsgefäße. Eine Vielzahl von Verfahren in der pharmazeutischen Chemie ist heute ohne Mikrotiterplatten nicht mehr vorstellbar.

Screening-, Synthese- oder Analyseverfahren auf der Grundlage von Mikrotiterplatten erlauben durch den Einsatz von standardisierter Robotik einen sehr hohen Durchsatz. Das Ziel vieler industrieller Prozesse besteht in der Optimierung auf hohen Durchsatz, weshalb der Mikrotiterplatte als zentrale Komponente dieser Technologie eine entscheidende Bedeutung zukommt.

Hauptnachteile der bestehenden Technologien auf der Basis von Mikrotiterplatten ist die Tatsache, dass die meisten Prozesse bei Umgebungsbedingungen stattfinden und die Mikrotiterplatte, bedingt durch ihren Öffnungsquerschnitt, eine hohe Interaktionsfläche zwischen der enthaltenen Probe und der Umgebung aufweist. Die möglichen Folgen sind Probenkontamination sowie Gefahr von Probenverlust durch Verdampfen. Der Einsatz von Robotik limitiert die Arbeitsgeschwindigkeit, da Massen in Form von Schwenkarmen oder Transportsystemen bewegt werden müssen. Die Trägheitskräfte auf die Mechanik, die bei einer Beschleunigung und Abbremsung auftreten, müssen kompensiert oder begrenzt werden, eine um Fehlpositionierung oder Beschädigung von Komponenten zu vermeiden.

Die Mikrofluidik stellt eine Alternative dar, hohe Durchsätze bei vergleichbaren Prozessen zu erreichen. Sie erlaubt das Bewegen, Mischen, Reagieren, Trennen und Analysieren von geringen Mengen an Flüssigkeit. Dies erfolgt in ruhenden Einrichtungen wie mikrofluidische Kanälen oder Mikroreaktionskammern oder in aktiven Strukturen wie Mikropumpen oder Mikroventilen. Das Problem der bewegten Masse besteht daher nicht. Die Mikrofluidik ist darüber hinaus in der Lage, neben der reinen Extraktion auch weitere Prozessschritte zu integrieren; während sich Robotiksysteme häufig nur für die Extraktion von Flüssigkeiten aus der Mikrotiterplatte einsetzen lassen.

Robotiksysteme sind heute von zahlreichen Herstellern kommerziell in verschiedener Ausführung verfügbar. Wie z. B. in der EP 2052776 A1 werden hierbei oft komplette Systemen mit nicht notwendigerweise mikrofluidischer Peripherie beschrieben. Das häufig eingesetzte Extraktionsverfahren besteht in der Anwendung eines Unterdrucks, der eine definierte Menge an Flüssigkeit in eine einwegtaugliche Spitze einer Vakuumpipette einsaugt. Die Robotik ermöglicht die Parallelisierung dieses Extraktionsverfahrens über eine parallele Betätigung mehrerer Ansaugvorrichtungen. Heute sind Einheiten zur parallelen Extraktion auf der Größe von Mikrotiterplatten verfügbar.

Diese Vorrichtungen weisen den Nachteil auf, dass sie lediglich eine Probennahme ermöglich; das Problem der Anbindung an mikrofluidische Einrichtungen wird nicht gelöst. Ein weiteres Problem besteht darin, dass die Probe vollständig in Kontakt mit der Umgebungsluft steht, was zu Kontamination bzw. Verdunstung und nachfolgendem Probenverlust führen kann.

Ein wesentlicher Nachteil der bekannten mikrofluidischen Systeme besteht darin, dass die Entwicklungen oft auf die Anwendung nur einer Komponente beschränkt sind, z.B. wurde ein Detektor für den Nachweis bestimmter Analyte optimiert oder eine Pumpe zum Erzielen von festgelegten Leistungszielen, oder eine chemische Reaktion wurde in einem bestimmen Kanal, der aus einem speziellen Material gefertigt ist, durchgeführt.

Über Jahre wurden Äquivalente zu makroskopischen industriellen Prozessen entwickelt, die in vielen Fällen vergleichbare Ergebnisse bei signifikant verringerten Probenvolumina ermöglichen. Auf diese Weise ist eine Reduktion von teuren Edukten und, bedingt durch die Miniaturisierung, eine Skalierung der Prozesse auf hohe Parallelität denkbar. Allerdings haben bis heute nur wenige mikrofluidische Systeme tatsächlich den Weg aus dem Labor in eine industrielle Anwendung gefunden. Einer der wichtigsten Gründe hierfür ist die fehlende Adaptierbarkeit an bestehende industrielle Systeme.

Vereinzelt wurden Lösungen zur Verbindung von mikrofluidischen Systemen mit Mikrotiterplatten beschrieben.

Die US 2003/224531 A1 offenbart einer Mikrotiterplatte, die in der Lage ist, Reaktionen parallel durchzuführen und die gebildeten Produkte mittels Elektrospray an ein Massenspektrometer abzugeben. Mit dieser Vorrichtung lassen sich Flüssigkeiten jedoch nicht extrahieren; außerdem wird keine Standard-Mikrotiterplatte eingesetzt, sondern ein mikrofluidisches System, das der Gestalt einer Mikrotiterplatte lediglich ähnelt.

Die WO 01/73396 A1 zeigt eine mikrofluidische Vorrichtung, die über ein Kapillarelement, das kontinuierlich Flüssigkeit aus dem Well einer Mikrotiterplatte in ein mikrofluidisches System zieht, direkt mit einem Well verbunden ist. Nachteilig hieran ist, dass sich der Fluss und die zu extrahierende Menge an Flüssigkeit nur eingeschränkt einstellen lassen und die Flüssigkeit in Kontakt mit der Umgebung steht. Weiterhin ist die Vorrichtung kaum konfigurier- und regelbar, insbesondere ist es schwierig, aus verschiedenen Wells einer Mikrotiterplatte zu extrahieren, da das System vollständig passiv ausgeführt ist und sich die Kapillarwirkung nicht einfach unterbinden lässt. Darüber hinaus ist es nicht möglich, eine Flüssigkeit in umgekehrter Richtung in das Well abzusetzen, da die Richtung der Kapillarität nicht umkehrbar ist.

In der US 2005/047962 A1 wird eine Vorrichtung beschrieben, die ähnlich einem Tintenstrahldruckkopf in der Lage ist, definierte Tropfen aus einer Düse in eine Mikrotiterplatte abzugeben. Dies erfolgt durch Druckbeaufschlagung einer Membran, wodurch ein Tropfen aus einer Düse geschossen wird. Nachteilig hieran ist, dass sich die Vorrichtung zur Abgabe eines Tröpfchens in eine Mikrotiterplatte eignet. Zur Entnahme eines Tröpfchens aus der Mikrotiterplatte ist es erforderlich, dass die Mikrotiterplatte selbst als Düsenplatte ausgeführt ist.

Die US 6274091 B1 Beschreibt eine Vorrichtung, mit der sich Flüssigkeiten aus speziell ausgestalteten Mikrotiterplatten mittels Unterdruck entnehmen lassen. Hierzu weist die Mikrotiterplatte auf der Unterseite einen Auslass z. B. in Form einer Düse auf, worüber der Inhalt des Wells abgesaugt wird. Alternativ kann das Well selbst verschlossen und evakuiert werden, wodurch die Flüssigkeit verdampft. In beiden Fällen lässt sich die Menge an zu extrahierendem Volumen nicht einstellen, so dass oft das gesamte Well geleert wird. Diese Vorrichtung ist zudem nicht in der Lage, Flüssigkeiten in ein Well abzugeben.

Aus der DE 10 2007 032 951 A1 und aus B.E. Rapp, L. Carneiro, K. Länge und M. Rapp, An indirect microfluidic flow injection analysis (FIA) system allowing diffusion free pumping of liquids by using tetradecane as intermediary liquid, Lab Chip, 9, S. 354-356, 2009, ist ein *Fluidtauscher bekannt,* der in der Lage ist, eine Flüssigkeit dann gegen eine andere Flüssigkeit auszutauschen, wenn beide chemisch nicht mischbar sind. Diese Bedingung wird z. B. durch den Einsatz einer wässrigen Phase und eines Öls als Mittlermedium erreicht. Werden beide Flüssigkeiten in ein Gefäß eingefüllt, das luftdicht verschlossen wird, stellt sich eine stabile Zweiphasengrenze ein, wobei die Flüssigkeit mit der geringeren Dichte oben liegt. Durch Einbringen von zwei Zugängen in das Gefäß, wobei jede Zuleitung mit jeweils einer der beiden Phasen in Kontakt steht, lässt sich eine Flüssigkeit gegen die andere austauschen. Wird ein Mittlermedium in die dazugehörige Phase durch den hiermit in Kontakt stehenden Eingang eingeführt, fließt das gleiche Volumen der wässrigen Phase durch den anderen Zugang aus dem Gefäß heraus, wodurch beiden Flüssigkeiten getauscht wurden.

Ausgehend hiervon ist es die Aufgabe der vorliegenden Erfindung, eine Vorrichtung und Verfahren zur Erzeugung und zur Ablage eines Fluidstroms aus Fluidsegmenten, die jeweils durch ein mit den Fluidsegmenten nicht mischbares Mittlermedium getrennt sind, bereitzustellen, die die Nachteile und Einschränkungen des Stands der Technik überwinden.

Hierzu soll eine Vorrichtung bereitgestellt werden, die den direkten Übergang zwischen der makroskopischen Fluidik einer Mikrotiterplatte und der mikroskopischen Fluidik einer mikrofluidischen Einrichtung ermöglicht. Insbesondere soll eine Vorrichtung vorgeschlagen werden, die ein flexibles Ein- und Ausschleusen von Flüssigkeitsvolumina zwischen einer Mikrotiterplatte und einem mikrofluidischen System in beide Richtungen ermöglicht, wobei die Vorrichtung mit dem eingangs genannten Standard der Mikrotiterplatte, der den Abstand der einzelnen Wells auf der Mikrotiterplatte festlegt, kompatibel ist.

Diese Aufgabe wird im Hinblick auf die Vorrichtung zur Erzeugung oder zur Ablage eines Fluidstroms aus Fluidsegmenten, die jeweils durch ein mit den Fluidsegmenten nicht mischbares Mittlermedium getrennt, durch die Merkmale des Anspruchs 1, im Hinblick auf eine Anordnung, die eine derartige Vorrichtung umfasst, durch die Merkmale des Anspruchs 4, im Hinblick auf ein Verfahren zur Erzeugung eines Fluidstroms durch die Schritte des Anspruchs 5, im Hinblick auf Verfahren zur Ablage eines Fluidstroms durch die Schritte des Anspruchs 6 oder 7 und im Hinblick auf die Verwendung der Vorrichtung durch den Anspruch 10 gelöst. Die Unteransprüche beschreiben jeweils vorteilhafte Ausgestaltungen der Erfindung.

Aus der Schaltungselektronik ist das Prinzip der *Parallel-zu-Seriell-Konvertierung* bekannt. Hierzu eingesetzte Schaltungen sind in der Lage, aus einem parallel einlaufenden Strom von Daten einen seriellen Strom z.B. zur Übermittlung an eine Schnittstelle oder umgekehrt zu erzeugen. Erfindungsgemäß wird dieses Prinzip auf den Austausch von Flüssigkeiten (Fluiden) zwischen einer Mikrotiterplatte und einer mikrofluidischen Einrichtung übertragen. Insbesondere geht es darum, eine parallele Bevorratung eines Fluids in einer Reihe von Vorratsgefäßen, wozu z.B. mehrere Gefäße nebeneinander oder mehrere Wells einer Mikrotiterplatte zählen, in einen seriellen Fluidstrom oder umgekehrt zu überführen. Hierzu wird von jedem Vorratsgefäß eine Menge an einem Fluid entnommen und in einen seriellen Strom überführt, der aus einer, durch ein Mittlermedium getrennte Abfolge der einzelnen Fluidsegmente besteht, oder ein serieller Strom, der aus einer, durch ein Mittlermedium getrennte Abfolge der einzelnen Fluidsegmente besteht, in eine Reihe von Vorratsgefäßen überführt.

Die erfindungsgemäße Vorrichtung zur Erzeugung oder zur Ablage eines Fluidstroms aus m > 1 Fluidsegmenten, die jeweils durch ein mit den Fluidsegmenten nicht mischbares Mittlermedium getrennt sind, (Konverter) ist ein Formkörper, bevorzugt aus Polymer, Metall, Keramik, Glas oder Silizium, in dem sich mindestens ein langer mikrofluidischer Kanal (Extraktionskanal) befindet. Die Länge des Kanals ist so festgelegt, dass diese ausreicht, um die einzelnen Vertiefungen (Wells) einer Mikrotiterplatte zu verbinden. Der Kanal steht mit den Wells jedoch nicht in direktem Kontakt, vielmehr zweigen vom Kanal für jedes Well jeweils zwei Seitenkanäle (Zugänge) mit jeweils unterschiedlicher Länge ab, die sich in der Ebene des Kanals befinden, letztlich in vertikaler Richtung in die einzelnen Wells der Mikrotiterplatte münden. In einer besonderen Ausführung sind die Zugänge in den drei Raumrichtungen so ausgestaltet, dass sie ein bestimmtes Volumen aufweisen oder eine minimale oder maximale Länge besitzen.

Die Zugänge sind konstruktiv als Schlauchsegmente, Stutzen, Hülsen o. ä. in einem Körper oder als getrennte Körper ausgeführt. Dabei ist jeder zweite Zugang zwischen dem Kanal und dem zugehörigen Well der Mikrotiterplatte jeweils mit einem zweiten Ventil verschließbar, das über ein externes Steuersignal ansteuerbar ist. Weiterhin ist im Kanal für jedes einzelne Well zwischen der Ausmündung des jeweils ersten Zugangs und des jeweils zweiten Zugangs jeweils ein erstes Ventil angebracht, mit dem der Kanal jeweils zwischen den beiden Zugängen (Ausmündungen) verschließbar ist.

Die einzelnen Wells der Mikrotiterplatte sind gegen den Konverter luftdicht abgeschlossen, etwa durch ein Dichtelement wie ein O-Ring, oder im Falle, dass der Konverter selbst aus einem weichen Polymer ausgeführt ist, fungiert das Polymer selbst unter leichtem Druck als Dichtelement gegen die Wells. In einer weniger geeigneten Ausführung des Systems werden die Wells der Mikrotiterplatte gegen den Konverter durch materialschlüssige Verbindungen, wie beispielsweise Kleben, gedichtet.

Erfindungsgemäß bildet der Konverter zusammen mit der Mikrotiterplatte ein abgeschlossenes System, das die einzelnen Wells mit jeweils zwei Zugängen zum Konverter ausstattet. Abgesehen von den beiden Zugängen ist das Well luftdicht verschlossen. Im Ausgangszustand befindet sich zwischen der Oberfläche der ersten flüssigen Phasen in den jeweiligen Wells und dem Konverter noch ein zweites flüssiges oder gasförmiges Volumen (Luftsegement), das abhängig von der Höhe des Flüssigkeitsspiegels der ersten flüssigen Phasen im jeweiligen Well unterschiedlich sein kann. Die Größe der Volumen der zweiten Phasen (Luftsegmente) ist für die Funktion des Konverters nicht von Belang.

In einer besonderen Ausgestaltung weist der Konverter mehr als einen Kanal auf. Auf diese Weise ist es möglich, nicht nur einen, sondern mehrere serielle Fluidströme herzustellen, die sich über mehrere Eingangs- und Ausgangsleitungen aus dem Konverter führen lassen.

In einer besonderen Ausgestaltung wird der Kanal (Extraktionskanal) so ausgestaltet, dass er gleichzeitig als mikrofluidischer Kanal für ein mikrofluidisches System fungiert. Dies erfolgt durch Anlegen von weiteren Strukturen wie Ventilen, Pumpen, Sensoren oder ähnliches im Kanal.

In einer besonderen Ausgestaltung werden die zwei einzelnen komplementären Ventile zu einem betreffenden Well in einer einzigen Struktur realisiert.

In einer besonderen Ausgestaltung wird ein festes Schaltmuster definiert, durch das z. B. alle Wells einer Mikrotiterplatte, eine Wellreihe oder Wellspalte bzw. Untergruppen hiervon angesteuert werden.

Die zugehörigen Verfahren zur Erzeugung oder Ablage von Fluidsegmenten sind in den Ausführungsbeispielen und den Ansprüchen näher erläutert.

Die erfindungsgemäße Vorrichtung lässt sich insbesondere als Verbindungseinrichtung zwischen einem mikrofluidischen Kanal und einer Mikrotiterplatte verwenden und löst somit das eingangs aufgeführte Problem des Anschlusses von Einrichtungen der Mikrofluidik an den industriellen Standard der Mikrotiterplatten nach ANSI/SBS 1-2004.

Die Erfindung wird im Folgenden anhand von Ausführungsbeispielen und den Figuren näher erläutert. Es zeigen:
- Fig. 1: Schematischer Schnitt durch **a)** eine Vorrichtung zur Erzeugung oder zur Ablage eines Fluidstroms aus Fluidsegmenten und b) eine Einrichtung zur Aufbewahrung von Flüssigkeiten (Mikrotiterplatte);
- Fig. 2: Schnitt durch einen Konverter, der auf eine Mikrotiterplatte aufgebracht ist, wobei ein Mittlermedium eingesetzt wird, das eine geringere Dichte als die ersten flüssigen Phasen in den Wells der Mikrotiterplatte aufweist;
- **Fig. 3**: **a)** Schnitt durch einen Konverter, der auf eine Mikrotiterplatte aufgebracht ist mit einem Mittlermedium, das eine höhere Dichte als die ersten flüssigen Phasen in den Wells der Mikrotiterplatte aufweist, wobei in b) die Anordnung in Bezug auf die Gravitationsrichtung gegenüber der Anordnung in **Fig. 2** umgedreht ist;
- **Fig. 4**: Seitenansicht des Entlüftungsvorgangs in der Anordnung aus Konverter und Mikrotiterplatte;
- **Fig. 5**: Seitenansicht der vollständig entlüfteten Anordnung aus Konverter und Mikrotiterplatte;
- **Fig. 6**: Schnitt durch die Anordnung aus Konverter und Mikrotiterplatte während der Bildung des Fluidstroms;
- **Fig. 7**: **a)** Schnitt durch die Anordnung aus Konverter und Mikrotiterplatte nach der der Bildung des Fluidstroms; **b)** Fluidstrom aus extrahierten Fluidsegmenten;
- **Fig. 8**: **a) und b)** Darstellung der Verfahrensweise zur Ablage von Fluidsegmenten, die jeweils durch ein Mittlermedium getrennt sind, in die Wells einer Mikrotiterplatte;
- **Fig. 9**: **a) und b)** Darstellung einer alternativen Verfahrensweise zur Ablage von Fluidsegmenten, die jeweils durch ein Mittlermedium getrennt sind, in die Wells einer Mikrotiterplatte;
- **Fig. 10**: Ansicht eines 96-Well Konverters **a)** von unten bzw. **b)** von oben; **c)** Schnitt durch eine Anordnung aus einem 96-Well Konverter, der auf eine 96-Well Mikrotiterplatte aufgesetzt ist.

### Konverter und Mikrotiterplatte

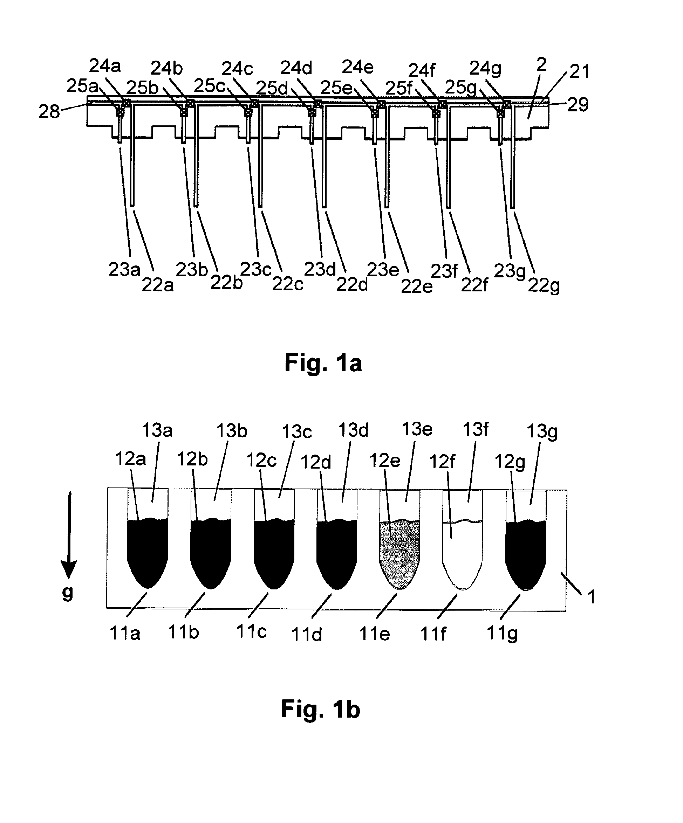

**Fig. 1a****)** zeigt schematisch einen Schnitt durch eine Vorrichtung (Formkörper, Konverter) **2** zur Erzeugung oder zur Ablage eines Fluidstroms aus Fluidsegmenten. Der Konverter besitzt einen Kanal (Extraktionskanal) **21,** der eine Eingangsleitung **28** und eine Ausgangsleitung **29** aufweist. Vom Kanal **21** münden 2 × n Kanäle ab, und zwar n erste Zugänge **22a-22g** und n zweite Zugänge **23a-23g,** wobei in diesem Ausführungsbeispiel der ersten Zugänge **22a-22g** länger als die zweiten Zugänge **23a-23g** sind. Die Abstände der Zugänge untereinander sind so festgelegt, dass diese in n Vertiefungen (Wells) **11a-11g** einer Einrichtung zur Aufbewahrung von Flüssigkeiten (Mikrotiterplatte) **1,** die in **Fig. 1b****)** dargestellt ist, einführbar sind. Weiterhin sind im Kanal 21 zwischen der Abzweigungsstelle jedes der n zweiten Zugänge **23a-23g** und der Abzweigungsstelle jedes zugehörigen ersten Zugangs **22a-22g** jeweils ein erstes, extern zu schaltendes Ventil **24a-24g** und an jedem der n zweiten Zugänge **23a-23g** selbst jeweils ein zweites, extern zu schaltendes Ventil **25a-25g** angebracht und auf diese Weise gegenüber dem Extraktionskanal **21** verschließbar.

Der Konverter **2** ist beispielhaft aus dem weichen Polymer Polydimethylsiloxan (PDMS) ausgeführt und so ausgestaltet, dass er in der Lage ist, jedes Well **11a-11g** einer ausgewählten Mikrotiterplatte **1** individuell abzudichten und nur die genannten jeweils zwei Zugänge in ein Well zu legen. Die einzelnen Wells **11a-11g** der Mikrotiterplatte 1 sind hier gegen den Konverter **2** luftdicht abgeschlossen, indem das Polymer als Dichtelement gegen die Wells **11a-11g** fungiert.

**Fig. 1b****)** zeigt schematisch einen Schnitt durch eine Vorrichtung zur Aufbewahrung von Flüssigkeiten (Mikrotiterplatte) **1.** Die Größe der Mikrotiterplatte 1 und die Anzahl der Wells **11a-11g** sollen durch dieses Ausführungsbeispiel nicht festgelegt werden, ebenso wenig die Zusammensetzung und die Volumina der ersten flüssigen Phase **12a-12g,** die in den Wells **11a-11g** vorgehalten werden.

In **Fig. 1b****)** ist exemplarisch eine Mikrotiterplatte **1** mit sieben Wells **11a-11g** dargestellt, wobei in jedem Well eine Flüssigkeit **12a-12g** mit einer anderen Zusammensetzung vorgelegt wird. In diesem Ausführungsbeispiel sind die Volumina der vorgelegten Flüssigkeiten **12a-12g** identisch und ihre Zusammensetzung jeweils verschieden; diese Art der Ausführung ist jedoch für die Funktion der erfindungsgemäßen Vorrichtung nicht zwingend erforderlich.

### Anordnung aus Konverter und Mikrotiterplatte

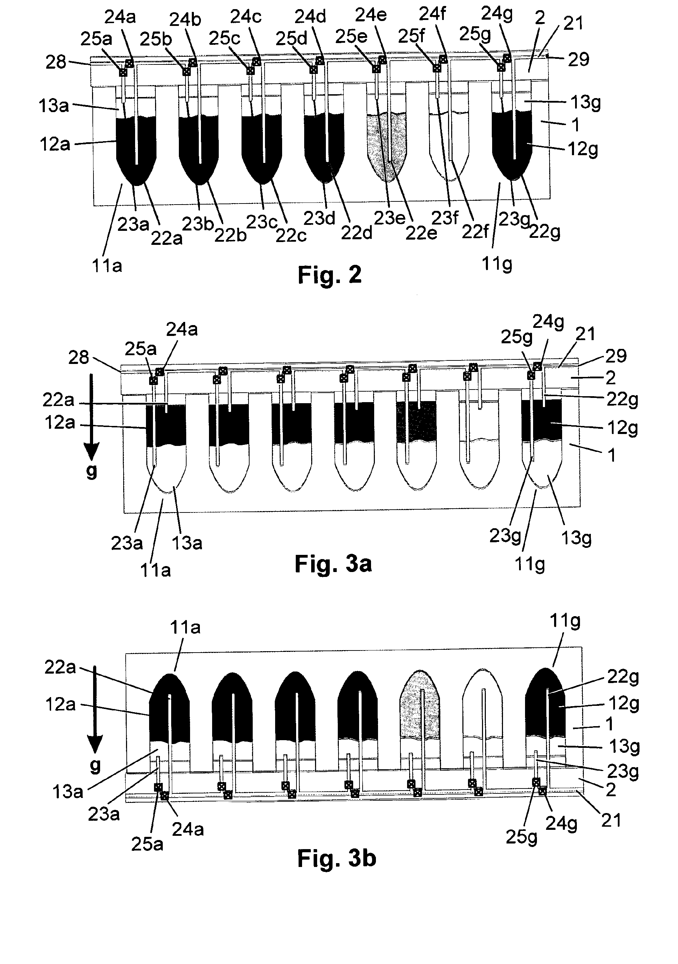

Wie in **Fig. 2** dargestellt, wird auf die Mikrotiterplatte **1** der erfindungsgemäße Konverter **2** als mikrofluidische Komponente aufgesetzt und bildet zusammen mit der Mikrotiterplatte **1** ein abgeschlossenes System, das die einzelnen Wells **11a-11g** mit jeweils zwei Zugängen **22a-22g, 23a-23g** zum Konverter 2 ausstattet. Abgesehen von den beiden Zugängen **22a-22g, 23a-23g** ist jedes Well **11a-11g** luftdicht verschlossen. Im Ausgangszustand befindet sich zwischen dem Konverter **2** und der jeweiligen Oberfläche der ersten flüssigen Phasen **12a-12g** in den jeweiligen Wells **11a-11g** noch eine zweite gasförmige Phase (Luftsegment) **13a-13g,** dessen Volumen vom Spiegel des jeweiligen Flüssigkeitsstands der ersten flüssigen Phasen **12a-12g** im betreffenden Well **11a-11g** abhängt, wobei die Größe dieser Volumina für die Funktion des Konverters belanglos ist.

Während in **Fig. 2** ein Mittlermedium **3** eingesetzt wird, das eine geringere Dichte als die ersten flüssigen Phasen **12a-12g** in den Wells **11a-11g** der Mikrotiterplatte **1** aufweist, wird in in **Fig. 3** ein Mittlermedium **3** eingesetzt wird, das eine höhere Dichte als die ersten flüssigen Phasen **12a-12g** in den Wells **11a-11g** der Mikrotiterplatte **1** besitzt. Der mit **g** bezeichnete Pfeil gibt hier die Richtung des Gravitationsvektors an.

Im Ausgangszustand ordnen sich daher gemäß **Fig. 3a****)** die ersten flüssigen Phasen **12a-12g** in den jeweiligen Wells **11a-11g** über der zugehörigen zweiten Phase **13a-13g** an. In diesem Ausführungsbeispiel ist es im Unterschied zur **Fig. 2** daher erforderlich, dass die ersten Zugänge 22a-22g zu den ersten flüssigen Phasen 12a-12g kürzer als die zweiten Zugänge 23a-23g zu den zweiten Phasen 13a-13g sind.

In einer alternativen Ausgestaltung kann gemäß **Fig. 3b****)** die Anordnung in Bezug auf die Gravitationsrichtung gegenüber der Anordnung in **Fig. 2** umgedreht werden. In dieser Ausgestaltung sind im Unterschied zur **Fig. 3a** die ersten Zugänge **22a-22g** zu den ersten flüssigen Phasen **12a-12g** wie in **Fig. 2** länger als die zweiten Zugänge **23a-23g** zu den zweiten Phasen **13a-13g.**

### Entlüftung des Konverters für den Betrieb

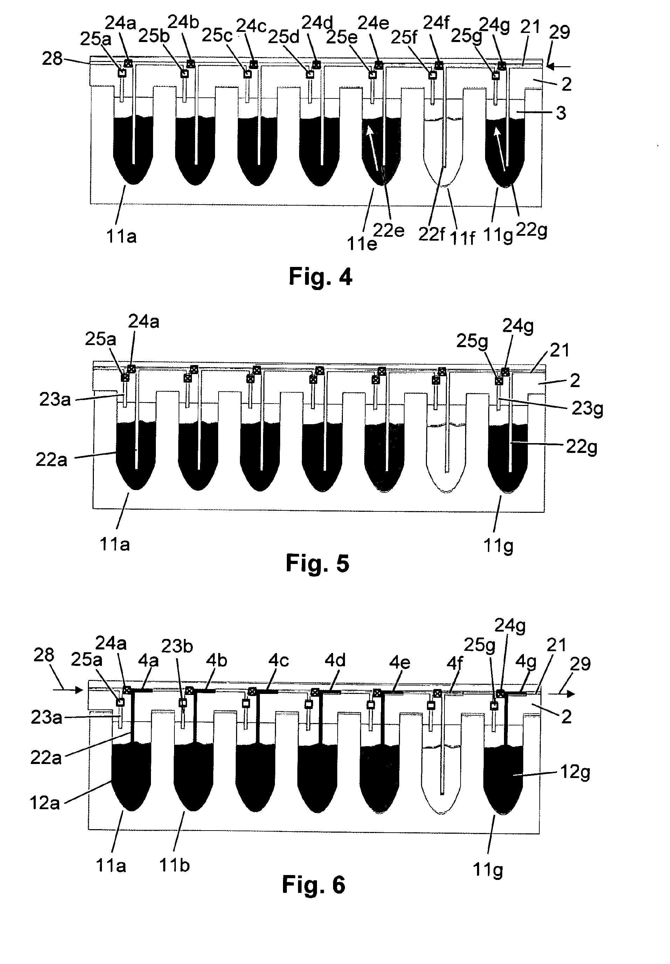

Zur Überführung der ersten flüssigen Phasen **12a-12g** aus der Mikrotiterplatte 1 mit dem Konverter **2** in eine serielle Abfolge von Fluidsegmenten **4a-4g** werden zunächst gemäß **Fig. 4** die zweiten Ventile 25a-25g geöffnet, während die ersten Ventile **24a-24g** bleiben geschlossen. Nun wird durch den Kanal **21** Mittlermedium **3,** das hier eine geringere Dichte als die ersten flüssigen Phasen **12a-12g** in den Wells **11a-11g** der Mikrotiterplatte **1** aufweist, eingeführt. Dabei wird das Mittlermedium **3** durch die Ausgangsleitung **29** des Konverters **2** mit einer extern angeordneten Pumpe (nicht dargestellt) kontinuierlich in den Kanal **21** des Konverters **2** geleitet. Durch die Schaltung der Ventile wird das Mittlermedium **3** zunächst durch den ersten Zugang **22g** des Wells **11g** in das Well **11g** geleitet, wo es aufgrund seiner geringeren Dichte nach oben steigt und die zweite gasförmige Phase (Luft) **13g** kontinuierlich aus dem Well **11g** verdrängt. Die Luft gelangt durch den zweiten Zugang **23g** des letzten Wells **11g** wieder in den Kanal **21,** wo sie durch den ersten Zugang **22f** des vorletzten Wells **11f** in das Well **11f** geleitet wird.

Dieser Vorgang setzt sich sequentiell durch alle Wells **11g-11a** fort, bis die Eingangsleitung 28 des Kanals 21 des Konverters 2 erreicht ist. Auf diese Weise füllen sich die Wells von hinten (Well **11g)** nach vorne (Well 11a) nach und nach mit Mittlermedium 3 auf und verdrängen die Luft aus den einzelnen Wells **11g-11a.** In Fig. 4 ist der Fall dargestellt, bei dem die Wells **11g** und **11f** bereits vollständig entlüftet sind; das Well **11e** wird als nächstes folgen.

Der Prozess wird solange fortgeführt, bis, wie in Fig. 5 dargestellt, alle Wells **11g-11a** vollständig entlüftet sind. In diesem Zustand befinden sich nur die ersten flüssigen Phasen 12a-12g und das Mittlermedium 3 in den Wells, die jeweils zu den Wells **11a-11g** führenden Zugänge 22a-22g, 23a-23g sowie der Kanal 21 sind vollständig mit Mittlermedium 3 gefüllt. Danach werden alle Ventile 24a-24g, 25a-25g geschlossen.

### Durchführung der Parallel-zu-Seriell-Konvertierung

Im entlüfteten Zustand ist der Konverter 2 nun bereit für die Durchführung der Parallel-zu-Seriell-Konvertierung. Hierzu wird ein sequentieller Probenstrom von Flüssigkeitssegmenten 4a-4g mit jeweils definiertem Volumen aus dem Vorrat der im jeweiligen Well **11a-11g** vorgehaltenen ersten flüssigen Phasen 12a-12g erzeugt. Hierzu kann durch eine komplementäre Ansteuerung der Ventile 24a-24g, 25a-25g ausgewählt werden, ob ein Segment aus dem jeweiligen Well **11a-11g** extrahiert werden soll oder nicht.

Unter *komplementär* ist hierbei zu verstehen, dass das jeweils andere Ventil den gegenteiligen Schaltzustand annehmen muss: Ist ein erstes Ventil **24x, × = a bis g** geöffnet, so muss das zugehörige zweite Ventil 25x geschlossen sein bzw. umgekehrt. Hierzu dürfen niemals beide komplementären Ventile 24x, 25x den gleichen Schaltzustand einnehmen.

Wird ein erstes Ventil 24x geöffnet, wobei dann das zugehörige zweite Ventil 25x geschlossen ist, nimmt das entsprechende Well **11x** nicht an der Parallel-zu-Seriell-Konvertierung teil. Im gegenteiligen Fall, wenn ein erstes Ventil 24x geschlossen, wobei dann das zugehörige zweite Ventil 25x geöffnet ist, nimmt das betreffende Well **11x** an der Parallel-zu-Seriell-Konvertierung teil.

In Fig. 6 ist der Fall gezeigt, bei dem alle Wells an der Konvertierung teilnehmen. Im Allgemeinen werden jedoch k der n Vertiefungen **11x** ausgewählt, aus der jeweils zumindest ein Teil der darin befindlichen ersten flüssigen Phase 12x als Fluidsegement 4x in den Fluidstrom überführt werden soll.

Insbesondere kann der beschriebene Vorgang auch sequentiell in mehreren Durchgängen abgearbeitet werden, wobei die Auswahl an Vertiefungen sowie das jeweils zu extrahierende Volumen für jeden Durchgang unterschiedlich sein können.

Gemäß Fig. 6 sind alle ersten Ventile 24x geschlossen und alle zweiten Ventile 25x geöffnet. Nun wird ein definiertes Volumensegment des Mittlermediums 3 durch die Eingangsleitung 28 des Konverters 2 mit einer festgelegten Geschwindigkeit eingeleitet. Das eingeleitete Volumensegment wird durch den zweiten Zugang 23a des ersten Wells **11a** in die zweite Phase 13a eingeleitet, wo es ein Segment gleicher Größe der im Well **11a** vorgelegten ersten flüssigen Phase 12a aus dem Well **11a** durch den ersten Zugang 22a in den Kanal 21 schiebt. Dabei verdrängt es das identische Volumen an Mittlermedium 3 aus dem Extraktionskanal 21 in den zweiten Zugang 23b des nächsten Wells **11b,** wo sich der beschriebene Vorgang entsprechend wiederholt. Auf diese Weise entsteht im Extraktionskanal 21 ein Probenstrom, der aus in Mittlermedium 3 eingebetteten Segmenten 4a-4g aus den ersten flüssigen Phasen, die in den jeweiligen Wells **11a-11g** vorlagen, besteht.

Das Volumen der Segmente 4a-4g wird dabei durch das Volumen des zu Beginn in den Konverter 2 durch den Eingang 28 eingebrachten Flüssigkeitssegments festgelegt, und durch das Volumen dieses Flüssigkeitssegments abzüglich der Volumina der beteiligten ersten Zugänge 22a-22g in die Wells **11a-11g** exakt berechnet. Da das Volumensegment in diesem Ausführungsbeispiel durch alle Wells **11a-11g** verschoben wird, sind die Volumina an extrahierter Flüssigkeit für alle Wells **11a-11g** gleich. Werden einzelne Wells durch die Invertierung der Ventilschaltzustände von der Konvertierung ausgeschlossen, bleibt das Volumensegment im Extraktionskanal unverändert und besteht dann weiterhin aus Mittlermedium 3. Durch eine serielle Schaltung mehrerer Konvertiervorgänge lassen sich Fluidsegmente 4x mit unterschiedlichen Volumina herstellen.

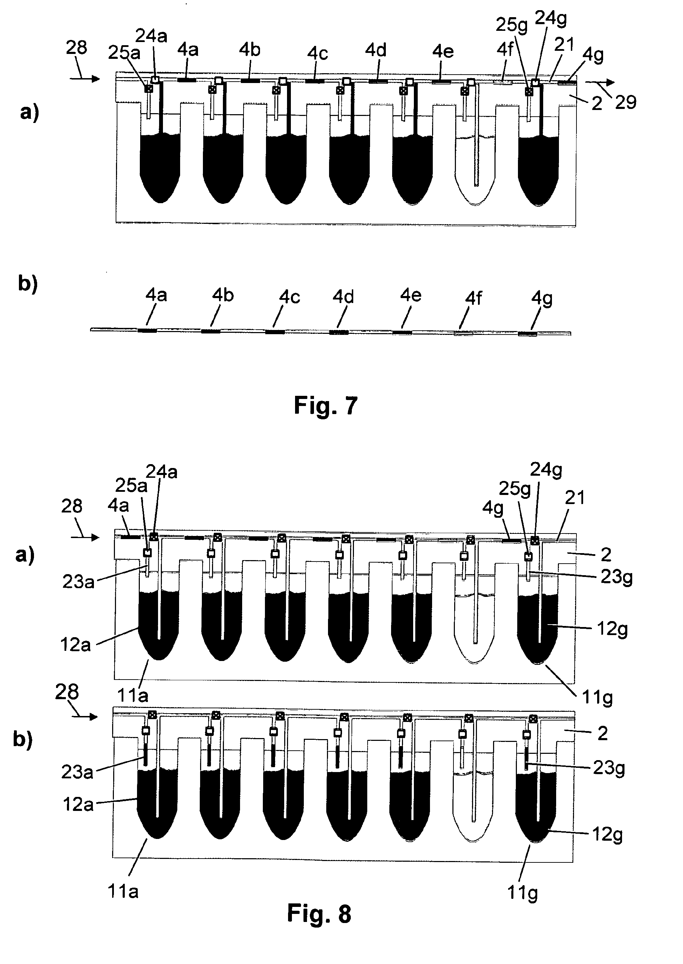

Im letzten Schritt der Konvertierung wird nach Fig. 7a) der im Kanal 21 erstellte Fluidstrom aus Fluidsegmenten 4a-4g aus dem Konverter 2 durch kontinuierliche Einförderung von Mittlermedium 3 in die Eingangsleitung 28 des Konverters 2 aus der Ausgangleitung 29 herausgefördert. Hierzu werden alle zweiten Ventile 25a-25g geschlossen und alle ersten Ventile 24a-24g geöffnet. Der in Fig. 7b) dargestellte sequentielle Fluidstrom aus den Fluidsegmenten 4a-4g wird nun einer Mikrofluidik zugeführt oder direkt weiterverwendet.

### Durchführung der Seriell-zu-Parallel-Konvertierung

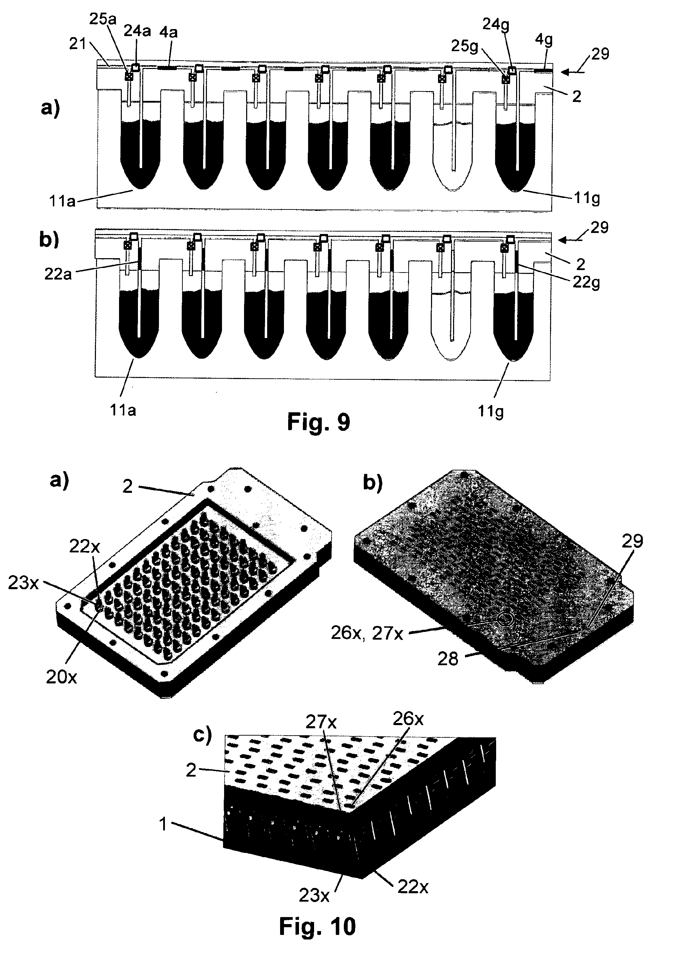

Fig. 8 und Fig. 9 beschreiben zwei alternative Verfahrensweisen, um Fluidsegmente 4a-4g aus einem Fluidstrom, die jeweils durch ein Mittlermedium 3 voneinander getrennt sind, in Vertiefungen (Wells) **11a-11g** abzulegen.

Gemäß Fig. 8 wird der Fluidstrom mit den Fluidsegmenten 4a-4g so platziert, dass die Fluidsegmente im Kanal 21 vor dem jeweils zu dem für das jeweilige Fluidsegment **4×, × = a-g** vorgesehenen Well **11x** gehörenden zweiten Zugang 23x zu liegen kommt. Dann werden jeweils die zum jeweiligen Well **11x** gehörenden ersten Ventile 24x geschlossen und die jeweils zweiten Ventile 25x geöffnet. Durch Einfördern von Mittlermedium 3 durch die Eingangsleitung 28 in den Kanal 21 wird das jeweilige Fluidsegment 4x durch den jeweiligen zweiten Zugang 23x in die zugehörige zweite Phase 13x gefördert, von wo sie gemäß des Dichtunterschieds zum Mittlermedium 3 zur jeweiligen ersten Phase 12x steigt oder sinkt.

In einer alternativen Ausgestaltung gemäß Fig. 9 wird der Fluidstrom mit den Fluidsegmenten wird so platziert, dass die Fluidsegmente 4a-4g im Kanal 21 hinter dem jeweils zu dem für das jeweilige Fluidsegment 4×, × = a-g vorgesehenen Well **11×** gehörenden ersten Zugang **22×** zu liegen kommt. Dann werden jeweils die zum jeweiligen Well **11×** gehörenden ersten Ventile 24x geschlossen und die jeweils zweiten Ventile 25x geöffnet. Durch Einfördern von Mittlermedium 3 durch die Ausgangsleitung 29 aus dem Kanal 21 wird das jeweilige Fluidsegment 4x durch den zugehörigen ersten Zugang 22x in das betreffende Well **11×** gefördert.

Im Allgemeinen werden jedoch k der n Vertiefungen **11x** ausgewählt, in die jeweils zumindest ein Fluidsegement 4x aus den Fluidstrom platziert werden soll.

Insbesondere kann der beschriebene Vorgang auch sequentiell in mehreren Durchgängen abgearbeitet werden, wobei die Auswahl an Vertiefungen für jeden Durchgang unterschiedlich sein können.

### Prototypische Ausgestaltung

Eine Prototyp eines 96-Well Parallel-zu-Seriell-Konverters ist in Fig. 10 dargestellt. Dieses Bauteil wurde in 3D-CAD modelliert und mittels Stereolithographie hergestellt. Der mikrofluidische Kanal ist innen liegend ausgeführt, die Aufsatzstellen für die Ventile auf der Oberseite der Komponente in Form kleiner rechteckiger Öffnungen vorgesehen. Auf diese Öffnungen werden die Ventile, insbesondere Membranventile, jeweils mit einem entsprechenden Aktor aufgesetzt. Ebenfalls zu erkennen sind die Ein- und Ausgangsleitung, die ebenfalls als innen liegende Kanäle modelliert sind.

Fig. 10a) zeigt die Ansicht des Konverters 2 von unten; zu erkennen sind Stutzen 20x, die die lange erste Zugänge 22x und die kurze zweite Zugänge 23x tragen.

Fig. **10b****)** zeigt die Ansicht des Konverters 2 von oben; zu erkennen sind die Eingangsleitung 28 und die Ausgangsleitung 29 aus dem Kanal 21, sowie die Bereiche, in denen die Aufsetzstellen 26x, 27x für die ersten zweiten Ventile angebracht sind. Nicht zu erkennen ist der Kanal 21, der im Inneren des Bauteils verläuft.

Fig. 10c) zeigt einen Schnitt durch eine Anordnung, die einen Konverter 2 umfasst, der auf eine Mikrotiterplatte 1 aufgesetzt ist. Zu erkennen sind auch hier die Aufsetzstellen 26x, 27x für die ersten und zweiten Ventile sowie die langen ersten Zugänge 22x und die kurzen zweiten Zugänge 23x.

In einer alternativen Konstruktion wird sie Anordnung so ausgeführt, dass keine innen liegenden Kanäle notwendig sind, so dass sich das Bauteil als polymere Komponente in Replikationstechnik, vorzugsweise in Spritzguss, ausführen lässt.

### Bezugszeichenliste

- ×: a, b, c, d, e, f oder g
- k: Auswahl aus a, b, c, d, e, f oder g

- 1: Mikrotiterplatte
- **11×**: Vertiefung (Well) **×**
- 12x: erste flüssige Phase im Well **×**
- 13x: zweite (gasförmige oder flüssige) Phase im Well **×**

- 2: Formkörper (Konverter)
- 20: Stutzen der zwei Zugänge 22x und 23x trägt
- 21: mikrofluidischer Kanal (Extraktionskanal)
- 22x: erster Zugang zum Well **×**
- 23x: zweiter Zugang zum Well **×**
- 24x: erstes Ventil im Kanal 21 zwischen der Abzweigungsstelle eines zweiten Zugangs 23x und der Abzweigungsstelle des zugehörigen ersten Zugangs 22x
- 25x: zweites Ventil am zweiten Zugang 23x zum Well **×**
- 26x: Aufsetzstelle für ein erstes Ventil 24x
- 27x: Aufsetzstelle für ein zweites Ventil 25x
- 28: Eingangsleitung des Kanals 21
- 29: Ausgangsleitung des Kanals 21

- 3: Mittlermedium

- 4x: Fluidsegment im Probenstrom, extrahiert aus dem Well **×**

## Patentansprüche

1. Vorrichtung zur Erzeugung oder zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, aufweisend einen Formkörper (2), der einen Kanal (21) zur Führung des Fluidstroms besitzt, von dem n ≥ 1 erste Zugänge (22a - 22g) und n zweite Zugänge (23a - 23g) derart abzweigen, dass diese in n Vertiefungen (11a - 11g) einführbar sind, wobei sich die Längen der ersten Zugänge (22a - 22g) von den Längen der zweiten Zugänge (23a - 23g) unterscheiden und wobei im Kanal (21) zwischen der Abzweigungsstelle jedes zweiten Zugangs (23a - 23g) und der Abzweigungsstelle jedes zugehörigen ersten Zugangs (22a - 22g) jeweils ein erstes
Ventil (24a - 24g) und an jedem zweiten Zugang (23a - 23g) jeweils ein zweites Ventil (25a - 25g) angebracht sind.

2. Vorrichtung nach Anspruch 1, wobei die n ersten Zugänge (22a - 22g) und die n zweiten Zugänge (23a - 23g) derart vom Kanal (21) abzweigen, dass die n ersten Zugänge (22a - 22g) jeweils in eine sich in einer der n Vertiefungen (11a - 11g) befindliche erste flüssige Phase (12a - 12g) und die n zweiten Zugänge (23a- 23g) jeweils in eine sich darüber oder darunter befindliche zweite Phase (13a - 13g) einführbar sind.

3. Vorrichtung nach Anspruch 1 oder 2, wobei die Vorrichtung eine Einrichtung zur Bewegung der Fluidsegmente (4a - 4g) und des Mittlermediums (3) aufweist oder an eine derartige Einrichtung angeschlossen ist.

4. Anordnung zur Erzeugung oder zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, die eine Vorrichtung nach einem der Ansprüche 1 bis 3, die auf eine Einrichtung (1) zur Aufbewahrung von Flüssigkeiten in n Vertiefungen (11a - 11g) aufgebracht ist, umfasst.

5. Verfahren zur Erzeugung eines Fluidstroms aus m > 1 Fluidsegmenten (4a - 4g), die jeweils durch ein mit den Fluidsegmenten (4a - 4g) nicht mischbares Mittlermedium (3) getrennt sind und die mittels einer Vorrichtung nach einem der Ansprüche 1 bis 3 jeweils aus einer ersten flüssigen Phase (12a - 12g) aus einer Auswahl k aus mehreren Vertiefungen n ≥ m (11a - 11g) entnommen werden, mit den Schritten
a) Einführen von Mittlermedium (3) in den Eingang (28) des Kanals (21) und Auswählen von k der n Vertiefungen (11,× × = a-g), aus der jeweils zumindest ein Teil der darin befindlichen ersten flüssigen Phase (12x) als Fluidsegement (4x) in den Fluidstrom überführt werden soll, Geschlossenhalten der zugehörigen ersten Ventile (24x) und Öffnen der zugehörigen zweiten Ventile (25x),
b) Einleiten eines Volumensegments mit Volumen V₀ aus dem Mittlermedium (3) durch den betreffenden zweiten Zugang (23x) der ersten in Bezug auf den Eingang (28) im Kanal angeordneten und zur Auswahl k gehörigen Vertiefungen in die zugehörige zweite Phase (13x), wodurch sich ein Fluidsegment (4x) mit dem Volumen V₀ aus der ersten flüssigen Phase (12x) der Vertiefung (11x) durch den zugehörigen ersten Zugang (22x) in den Kanal (21) schiebt und
c) sich anschließend der Schritt b) für jede nächste im Kanal angeordnete und zur Auswahl k gehörende Vertiefung wiederholt, bis aus allen zur Auswahl k gehörenden Vertiefungen ein Fluidsegment (4x) jeweils mit dem Volumen V₀ extrahiert wurde,
e) Schließen aller n zweiten Ventile (25a-25g) und Öffnen aller n ersten Ventile (24a-24g) und Herausführen des erzeugten Fluidstroms aus dem Kanal (21).

6. Verfahren zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, und die mittels einer Vorrichtung nach einem der Ansprüche 1 bis 3 jeweils in eine erste flüssigen Phase (12a - 12g) in einer Auswahl k von n ≥ m Vertiefungen (11a - 11g) abgelegt werden, mit den Schritten
p) Einführen des Fluidstroms mit den Fluidsegmenten (4a-4g) in den Kanal (21), so dass jedes Fluidsegment (4x, × = a-g) vor dem jeweils zu dem für das jeweilige Fluidsegment vorgesehenen Well (11x) gehörenden zweiten Zugang (23x) zu liegen kommt,
q) Öffnen aller zweiten Ventile (25x) aller zur Auswahl k gehörenden Vertiefungen (11x) und Schließen (25x) aller ersten Ventile (24x) aller zur Auswahl *k* gehörenden Vertiefungen (11x),
r) Einfördern von Mittlermedium (3) in einen Eingang (28) des Kanals (21), wodurch das jeweilige Fluidsegment (4x) durch den jeweiligen zweiten Zugang (23x) in die zugehörige zweite Phase (13x) der ersten im Kanal angeordneten Vertiefung gefördert wird, von wo sie aufgrund des Dichteunterschieds zum Mittlermedium (3) zur jeweiligen ersten Phase (12x) steigt oder sinkt,
s) Wiederholen des Schrittes r) für alle zur Auswahl k gehörenden Vertiefungen.

7. Verfahren zur Ablage eines Fluidstroms aus m > 1 Fluidsegmenten (4a - 4g), die jeweils durch ein mit den Fluidsegmenten (4a - 4g) nicht mischbares Mittlermedium (3) getrennt sind, und die mittels einer Vorrichtung nach einem der Ansprüche 1 bis 3 jeweils in eine erste flüssigen Phase (12a - 12g) in einer Auswahl k von n ≥ m Vertiefungen (11a - 11g) abgelegt werden, mit den Schritten
p') Einführen des Fluidstroms mit den Fluidsegmenten (4a-4g) in den Kanal (21), so dass jedes Fluidsegment (4x, × = a-4g) vor dem jeweils zu dem für das jeweilige Fluidsegment vorgesehenen Well (11x) gehörenden ersten Zugang (22x) zu liegen kommt,
q) Öffnen aller zweiten Ventile (25x) aller zur Auswahl k gehörenden Vertiefungen (11x) und Schließen (25x) aller ersten Ventile (24x) aller zur Auswahl k gehörenden Vertiefungen (11x),
r') Einfördern von Mittlermedium (3) in einen Ausgang (29) des Kanals (21), wodurch das jeweilige Fluidsegment (4x) durch den jeweiligen ersten Zugang (21x) in die zugehörige erste Phase (12x) gefördert wird,
s') Wiederholen des Schrittes r') für alle zur Auswahl k gehörenden Vertiefungen.

8. Verfahren nach einem der Ansprüche 5 bis 7, wobei vor Schritt a), Schritt p) oder Schritt p') ein Volumen an Mittlermedium (3) durch einen ausgewählten zweiten Zugang (23x, × = a-g) in die zugehörige zweite Phase (13x) der betreffenden Vertiefung (11x) geführt wird, so dass das Mittlermedium (3) dasselbe Volumen an der zugehörigen ersten flüssige Phase (12x) durch den zugehörigen ersten Kanal (22x) aus der betreffenden Vertiefung (11x) in den Kanal (21) verdrängt.

9. Verfahren nach einem der Ansprüche 5 bis 8, wobei die zweite Phase (23x) aus dem Mittlermedium (3) besteht oder die zweite Phase (23x) aus einem anderen Fluid besteht, das mit den jeweils in den Vertiefung vorliegenden ersten Phasen (22x) und dem Mittlermedium (3) nicht mischbar ist.

10. Verwendung einer Vorrichtung nach einem der Ansprüche 1 bis 3 als Verbindungseinrichtung zu einer Mikrotiterplatte.
